# EUROPEAN PATENT SPECIFICATION

(11) **EP 3 769 927 B1**
(45) Date of publication and mention of the grant of the patent: **23.08.2023**
(21) Application number: 19188156.4
(22) Date of filing: 24.07.2019
(51) Int. Cl.: B29C 45/14, B60J 1/20, B60J 7/00, B29L 31/30, B29K 25/00

(54) **VEHICLE ROOF WITH A ROLLER BLIND ASSEMBLY**
FAHRZEUGDACH MIT EINER ROLLOANORDNUNG
TOIT DE VÉHICULE DOTÉ D'UN ENSEMBLE DE STORE

(43) Date of publication of application: 27.01.2021
(73) Proprietor: Webasto SE, 82131 Stockdorf (DE)
(72) Inventor: VIVIEN, Jacques, 79300 TERVES (FR)
(74) Representative: advotec.

(56) References cited:
- WO-A2-2006/053520
- DE-A1-102006 017 538

## Description

The invention relates to a vehicle roof having the features of the preamble of claim 1 and to a guide rail having the features of the preamble of claim 8.

A vehicle roof of this kind is known from practice and, for example, forms a panoramic roof comprising a transparent roof portion, which may be a fixed roof element or a lid element of a roof opening system. In order to protect the vehicle interior against potentially disturbing light incidence through the transparent roof portion, a shading system in the form of a roller blind assembly may be provided. The roller blind assembly comprises a roller blind web which constitutes a shading element and whose edges disposed on either side of the vertical longitudinal center plane of the roof are each guided in a guide track of a guide rail. The guide rail is typically an extruded aluminum profile which has a profile portion that forms the guide track for the roller blind web. Extruded aluminum profiles often fail to meet the weight requirements in connection with lightweight construction.

Furthermore, it is known from practice for the guide rails for roof shading systems to be made of plastic. In the case of plastic guide rails, however, the guide track for the roller blind assembly cannot always be shaped as needed because such a shape cannot be easily demolded from a mold used for production.

From document DE 10 2006 017 538 A1, a roller blind arrangement for a vehicle is known. This roller blind arrangement comprises a roller blind having lateral guide belts which are connected to sliding elements guided in lateral guide rails.

From document WO 2006/053520 A3, a roller blind system for a motor vehicle is known, comprising a roller blind web having lateral flat guide strips guided in a respective guide rail.

The object of the invention is to provide a vehicle roof of the generic type described above that meets high weight requirements while offering high flexibility in terms of the design of the guide track for the roller blind web.

According to the invention, this object is attained by the vehicle roof having the features of claim 1.

According to the invention, a vehicle roof is proposed in which the guide rails are hybrid components in the sense that the rail bodies are injection-molded and the guide tracks for guiding the lateral edges of the roller blind web or lateral guide strips of the roller blind web are each formed by an insert which is insert-casted or insert-injected during production of the rail body. Since the rail body is made of plastic, it can be a lightweight element, the shape or cross-section of the guide track being defined by the profile. Thus, the shape of the guide track cannot lead to demolding issues during production of the rail body.

In a preferred embodiment of the vehicle roof according to the invention, the profile is made of plastic and is preferably an extruded profile. Thus, the profile forming the guide track can also be a lightweight component which can additionally exhibit good adhesion to the plastic of the rail body.

For the connection between the profile and the rail body to be as tight as possible, the plastic of the profile and the plastic of the rail body are each made of a thermoplastic, allowing the two plastics to become at least partially bonded to each other. During production of the injection-molded plastic part, the temperature of the injected plastic can cause the surface area of the profile to fuse with the surface area of the profile, the materials of the profile and of the rail body forming a bonded connection.

In an advantageous embodiment of the vehicle roof according to the invention, both the plastic of the profile and the plastic of the rail body are selected from a common group of materials, in particular from a plastic material group comprising styrenic polymers.

So the plastics used for the profile and the rail body are preferably from the same family of materials.

In another specific embodiment of the vehicle roof according to the invention, in which, for example, a pull bar for operating the roller blind web and a drive cable for the pull bar are guided on the guide rail, the guide body forms a lower shell on which an upper rail part is placed, the upper rail part forming an upper shell and limiting a guide channel together with the lower shell. A pull bar slider and/or a drive cable can be guided in the guide channel.

To meet lightweight requirements, advantageously, the upper shell is also a plastic molded part, in particular an injection-molded plastic part which is fixed to the lower shell. Fixing can take place by means of locking pins formed on the upper side of the lower shell and engaging into corresponding holes or recesses of the upper shell. Alternatively or additionally, fixing can take place b any other appropriate means, e. g. by screws, rivets, chemical assembling like gluing and/or fusing.

In order to optimize the functionality of the guide rail, a lateral surface of the profile, which is an insert of the injection-molded plastic part, can limit the guide channel. Thus, the profile not only defines the guide track for the lateral edge of the roller blind web or for the lateral guide strip, which may be formed by a constant force spring, for example, but also serves to guide another component, such as a pull bar slider or the like.

The invention also relates to a guide rail for a roller blind assembly of a vehicle roof, the guide rail comprising a guide track for guiding a lateral edge of a roller blind web and a rail body, which is an injection-molded plastic part, the guide track being formed by a profile which is an insert of the injection-molded plastic part and which is overmolded with the injection-molded plastic part.

Other advantages and advantageous embodiments of the subject-matter of the invention are apparent from the description, the drawing, and the claims.

An embodiment of a vehicle roof having a guide rail configured according to the invention is illustrated in a schematically simplified manner in the drawing and will be explained in more detail in the following description.
- Fig. 1: shows a perspective view of a vehicle roof having a transparent roof portion and a roller blind assembly;
- Fig. 2: shows a perspective partial view of a guide rail of the roller blind assembly;
- Fig. 3: shows a section through the guide rail of Figure 2 along line III-III in Figure 2;
- Fig. 4: shows an upper shell of the guide rail;
- Fig. 5: shows a lower shell of the guide rail together with a profile for forming a guide track; and
- Fig. 6: shows the profile in an isolated view.

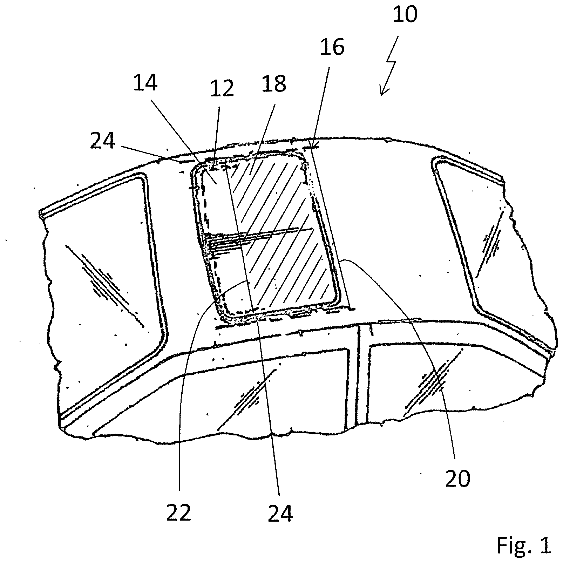

Figure 1 shows a vehicle roof 10 which has a roof opening 12 which can be closed or at least partially opened by means of a transparent lid element 14. To be able to shade the transparent roof portion formed by lid element 14 and roof opening 12, vehicle roof 10 has a roller blind assembly 16 which comprises a roller blind web 18 as a shading element. Roller blind web 18 can be wound into a roller blind coil 20 in the area of the rear edge of roof opening 12. To shade roof opening 12, roller blind web 18 can be unwound from roller blind coil 20. To operate or unwind it, roller blind web 18 has a pull bar 22 at its edge facing away from roller blind coil 20, pull bar 22 extending in the transverse direction of the vehicle and being guided in a respective roof-attached guide rail 24 via a pull bar slider (not shown) at each of its two ends. The lateral edges of roller blind web 18 disposed on either side of the vertical longitudinal center plane of the roof are also guided in guide rails 24 when in the state unwound from roller blind coil 20.

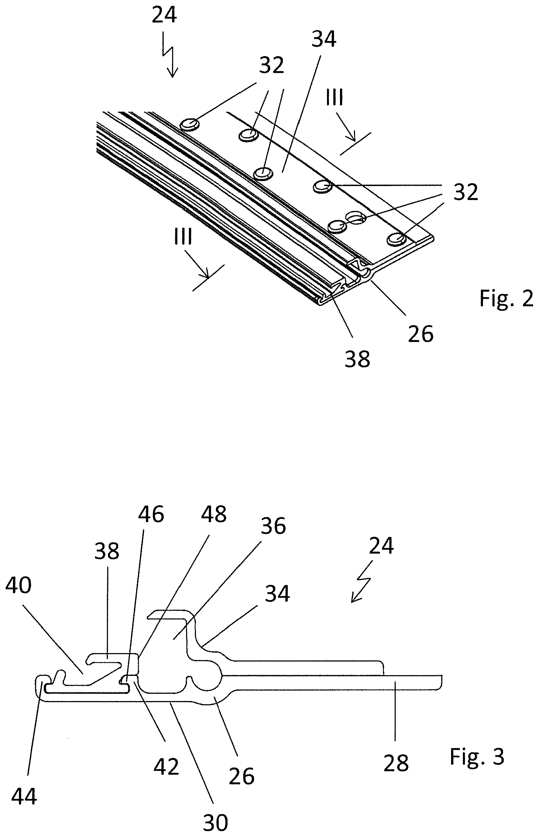

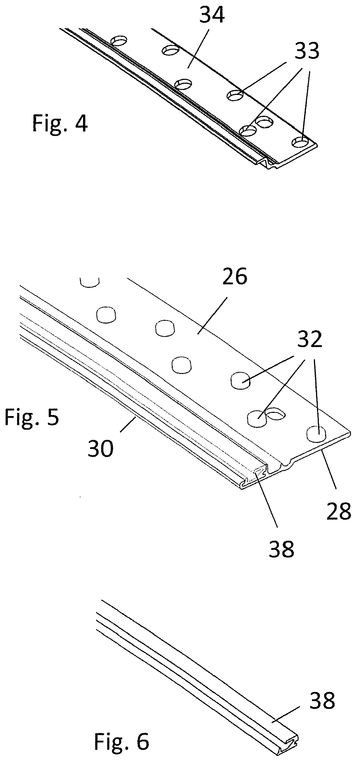

The two disposed guide rails 24 are mirror-symmetrical to each other with respect to the vertical longitudinal center plane of the roof, which is why only one of guide rails 24 will be described in detail below based on Figures 2 to 6.

Respective guide rail 24, which extends along the lateral edge of roof opening 12, comprises a rail body 26 which has a plate-shaped fixing portion 28 facing away from roof opening 12 and a guide portion 30 facing toward roof opening 12. Locking domes 32 which serve to fix an upper rail part 34 and engage into locking holes 33 thereof to do so are integrally formed on the upper side of fixing portion 28. Rail body 26 thus forms a lower shell and upper rail part 34 forms an upper shell. Together, rail body 26 and upper rail part 34 limit a guide channel 36 for guiding a pull bar slider and a drive cable. Guide channel 36 is formed in guide portion 30 of rail body 26.

Rail body 26 is an injection-molded plastic part made of a thermoplastic and accommodates, in guide portion 30, a profile 38 which defines a guide track 40 in which a lateral edge portion of roller blind web 18 is guided via a guide strip, which can be formed by a constant force spring, in particular. Profile 38 is an extruded plastic profile made of a plastic that is selected from the same family of materials as the thermoplastic of rail body 26. For example, both are made by a plastic material comprising styrenic polymers. Profile 38, which is an insert, and rail body 26 are at least partially connected to each other in a bonded and form-fitting manner.

To support profile 38, rail body 26 has two support ribs 42 and 44. Support rib 42 engages into a lateral longitudinal groove 46 of profile 38. Support rib 44 engages over an inner longitudinal edge of profile 38. A lateral surface 48 of profile 38 that faces away from roof opening 12 limits guide channel 36 on the side facing toward roof opening 12.

### Reference signs

- 10: vehicle roof
- 12: roof opening
- 14: lid element
- 16: roller blind assembly
- 18: roller blind web
- 20: roller blind coil
- 22: pull bar
- 24: guide rails
- 26: rail body
- 28: fixing portion
- 30: guide portion
- 32: locking dome
- 33: locking holes
- 34: upper rail part
- 36: guide channel
- 38: profile
- 40: guide track
- 42: support rib
- 44: support rib
- 46: groove
- 48: lateral surface

## Claims

1. A vehicle roof comprising a transparent roof portion and a roller blind assembly (16) for shading the transparent roof portion, the roller blind assembly (16) comprising a roller blind web (18) whose lateral edges are each guided in a guide track (40) of a guide rail (24), **characterized in that** the guide rail (24) comprises a rail body (26) which extends along the transparent roof portion and which is an injection-molded plastic part, and the guide track (40) is formed by a profile (38) which is an insert of the injection-molded plastic part and which is overmolded with the injection-molded plastic part.

2. The vehicle roof according to claim 1, **characterized in that** the profile (38) is made of plastic and is preferably an extruded profile.

3. The vehicle roof according to claim 2, **characterized in that** the plastic of the profile (38) and the plastic of the rail body (26) are each made of a thermoplastic and are at least partially bonded to each other.

4. The vehicle roof according to claim 2 or 3, **characterized in that** the plastic of the profile (38) and the plastic of the rail body (26) are selected from a common group of materials, in particular from a plastic material group comprising styrenic polymers.

5. The vehicle roof according to any one of claims 1 to 4, **characterized in that** the rail body (26) forms a lower shell on which an upper rail part (34) is placed, the upper rail part (34) forming an upper shell and limiting a guide channel (36) together with the lower shell.

6. The vehicle roof according to claim 5, **characterized in that** the upper shell is a plastic part which is fixed to the lower shell.

7. The vehicle roof according to claim 5 or 6, **characterized in that** a lateral surface of the profile (38), which forms the insert of the injection-molded plastic part, limits the guide channel (36).

8. A guide rail for a roller blind assembly of a vehicle roof, the guide rail comprising a guide track for guiding a lateral edge of a roller blind web, **characterized by** a rail body (26), which is an injection-molded plastic part, the guide track being formed by a profile (38) which is an insert of the injection-molded plastic part and which is overmolded with the injection-molded plastic part.

9. The guide rail according to claim 8, **characterized in that** the profile (38) is made of plastic and is preferably an extruded profile.

10. The guide rail according to claim 9, **characterized in that** the plastic of the profile (38) and the plastic of the rail body (26) are each made of a thermoplastic and are at least partially bonded to each other.

11. The guide rail according to one of claims 8 to 10, **characterized in that** the plastic of the profile (38) and the plastic of the rail body (26) are selected from a common group of materials, in particular from a plastic material group comprising styrenic polymers.

12. The guide rail according to any one of claims 8 to 11, **characterized in that** the rail body (26) forms a lower shell on which an upper rail part (34) is placed, the upper rail part (34) forming an upper shell and limiting a guide channel (36) together with the lower shell.

13. The guide rail according to claim 12, **characterized in that** the upper shell is a plastic part which is fixed to the lower shell.

14. The guide rail according to claim 12 or 13, **characterized in that** a lateral surface of the profile (38), which is an insert of the injection-molded plastic part, limits the guide channel (36).

## Patentansprüche

1. Fahrzeugdach, umfassend einen transparenten Dachabschnitt und eine Rolloanordnung (16) zur Beschattung des transparenten Dachabschnitts, die eine Rollobahn (18) umfasst, die mit ihren seitlichen Rändern jeweils in einer Führungsbahn (40) einer Führungsschiene (24) geführt ist, **dadurch gekennzeichnet, dass** die Führungsschiene (24) einen sich entlang des transparenten Dachabschnitts erstreckenden Schienenkörper (26) umfasst, der ein Kunststoffspritzgießteil ist, und die Führungsbahn (40) von einem Profil (38) gebildet ist, das ein Einlegeteil des Kunststoffspritzgießteils ist und von diesem umspritzt ist.

2. Fahrzeugdach nach Anspruch 1, **dadurch gekennzeichnet, dass** das Profil (38) aus Kunststoff gefertigt ist und vorzugsweise ein Strangpressprofil ist.

3. Fahrzeugdach nach Anspruch 2, **dadurch gekennzeichnet, dass** der Kunststoff des Profils (38) und der Kunststoff des Schienenkörpers (26) jeweils aus einem Thermoplasten gebildet sind und zumindest bereichsweise einen Stoffschluss eingehen.

4. Fahrzeugdach nach Anspruch 2 oder 3, **dadurch gekennzeichnet, dass** der Kunststoff des Profils (38) und der Kunststoff des Schienenkörpers (26) aus einer gemeinsamen Materialgruppe, insbesondere aus einer Styrol-Polymere umfassenden Kunststoffmaterialgruppe, ausgewählt sind.

5. Fahrzeugdach nach einem der Ansprüche 1 bis 4, **dadurch gekennzeichnet, dass** der Schienenkörper (26) eine Unterschale bildet, auf die ein Schienenoberteil (34) aufgesetzt ist, das eine Oberschale bildet und zusammen mit der Unterschale einen Führungskanal (36) begrenzt.

6. Fahrzeugdach nach Anspruch 5, **dadurch gekennzeichnet, dass** die Oberschale als Kunststoffteil ausgebildet ist, das an der Unterschale fixiert ist.

7. Fahrzeugdach nach Anspruch 5 oder 6, **dadurch gekennzeichnet, dass** das Profil (38), das als Einlegeteil des Kunststoffspritzgießteils ausgebildet ist, mit einer Seitenfläche den Führungskanal (36) begrenzt.

8. Führungsschiene für eine Rolloanordnung eines Fahrzeugdachs, umfassend eine Führungsbahn zur Führung eines seitlichen Rands einer Rollobahn, **gekennzeichnet durch** einen Schienenkörper (26), der als Kunststoffspritzgießteil ausgebildet ist, wobei die Führungsbahn von einem Profil (38) gebildet ist, das ein Einlegeteil des Kunststoffspritzgießteils ist und von diesem umspritzt ist.

9. Führungsschiene nach Anspruch 8, **dadurch gekennzeichnet, dass** das Profil (38) aus Kunststoff gefertigt ist und vorzugsweise ein Strangpressprofil ist.

10. Führungsschiene nach Anspruch 9, **dadurch gekennzeichnet, dass** der Kunststoff des Profils (38) und der Kunststoff des Schienenkörpers (26) jeweils aus einem Thermoplasten gebildet sind und zumindest bereichsweise einen Stoffschluss eingehen.

11. Führungsschiene nach einem der Ansprüche 8 bis 10, **dadurch gekennzeichnet, dass** der Kunststoff des Profils (38) und der Kunststoff des Schienenkörpers (26) aus einer gemeinsamen Materialgruppe, insbesondere einer Styrol-Polymere umfassenden Kunststoffmaterialgruppe, ausgewählt sind.

12. Führungsschiene nach einem der Ansprüche 8 bis 11, **dadurch gekennzeichnet, dass** der Schienenkörper (26) eine Unterschale bildet, auf die ein Schienenoberteil (34) aufgesetzt ist, das eine Oberschale bildet und zusammen mit der Unterschale einen Führungskanal (36) begrenzt.

13. Führungsschiene nach Anspruch 12, **dadurch gekennzeichnet, dass** die Oberschale als Kunststoffteil ausgebildet ist, das an der Unterschale fixiert ist.

14. Führungsschiene nach Anspruch 12 oder 13, **dadurch gekennzeichnet, dass** das Profil (38), das als Einlegeteil des Kunststoffspritzgießteils ausgebildet ist, mit einer Seitenfläche den Führungskanal (36) begrenzt.

## Revendications

1. Toit de véhicule comprenant une partie de toit transparente et un ensemble de store (16) pour ombrager la partie de toit transparente, l'ensemble de store (16) comprenant un lé de store (18) dont les bords latéraux sont guidés chacun dans une piste de guidage (40) d'un rail de guidage (24), **caractérisé en ce que** le rail de guidage (24) comprend un corps de rail (26) qui s'étend le long de la partie de toit transparente et qui est une pièce de plastique moulée par injection et la piste de guidage (40) est formée par un profil (38) qui est un insert de la pièce de plastique moulée par injection et qui est surmoulé par la pièce de plastique moulée par injection.

2. Toit de véhicule selon la revendication 1, **caractérisé en ce que** le profil (38) est en plastique et est de préférence un profil extrudé.

3. Toit de véhicule selon la revendication 2, **caractérisé en ce que** le plastique du profil (38) et le plastique du corps de rail (26) sont chacun en matière thermoplastique et sont reliés au moins partiellement par liaison par matière.

4. Toit de véhicule selon la revendication 2 ou 3, **caractérisé en ce que** le plastique du profil (38) et le plastique du corps de rail (26) sont sélectionnés dans un groupe de matières commun, notamment dans un groupe de matières plastiques comprenant des polymères de styrène.

5. Toit de véhicule selon l'une quelconque des revendications 1 à 4, **caractérisé en ce que** le corps de rail (26) forme une coque inférieure sur laquelle une partie de rail supérieure (34) est placée, la partie de rail supérieure (34) formant une coque supérieure et limitant un canal de guidage (36) conjointement avec la coque inférieure.

6. Toit de véhicule selon la revendication 5, **caractérisé en ce que** la coque supérieure est une pièce plastique qui est fixée à la coque inférieure.

7. Toit de véhicule selon la revendication 5 ou 6, **caractérisé en ce qu'**une surface latérale du profil (38), qui forme l'insert de la pièce de plastique moulée par injection, limite le canal de guidage (36).

8. Rail de guidage pour un ensemble de store d'un toit de véhicule, le rail de guidage comprenant une piste de guidage pour guider un bord latéral d'un lé de store, **caractérisé par** un corps de rail (26), qui est une pièce de plastique moulée par injection, la piste de guidage étant formée par un profil (38) qui est un insert de la pièce de plastique moulée par injection et qui est surmoulé par la pièce de plastique moulée par injection.

9. Rail de guidage selon la revendication 8, **caractérisé en ce que** le profil (38) est en plastique et est de préférence un profil extrudé.

10. Rail de guidage selon la revendication 9, **caractérisé en ce que** le plastique du profil (38) et le plastique du corps de rail (26) sont chacun en matière thermoplastique et sont reliés au moins partiellement par liaison par matière.

11. Rail de guidage selon l'une quelconque des revendications 8 à 10, **caractérisé en ce que** le plastique du profil (38) et le plastique du corps de rail (26) sont sélectionnés dans un groupe de matières commun, notamment dans un groupe de matières plastiques comprenant des polymères de styrène.

12. Rail de guidage selon l'une quelconque des revendications 8 à 11, **caractérisé en ce que** le corps de rail (26) forme une coque inférieure sur laquelle une partie de rail supérieure (34) est placée, la partie de rail supérieure (34) formant une coque supérieure et limitant un canal de guidage (36) conjointement avec la coque inférieure.

13. Rail de guidage selon la revendication 12, **caractérisé en ce que** la coque supérieure est une pièce plastique qui est fixée à la coque inférieure.

14. Rail de guidage selon la revendication 12 ou 13, **caractérisé en ce qu'**une surface latérale du profil (38), qui est un insert de la pièce de plastique moulée par injection, limite le canal de guidage (36).
